# EUROPÄISCHE PATENTSCHRIFT

(11) **EP 3 709 113 B1**
(45) Veröffentlichungstag und Bekanntmachung des Hinweises auf die Patenterteilung: **07.06.2023**
(21) Anmeldenummer: 20161877.4
(22) Anmeldetag: 09.03.2020
(51) Int. Cl.: G05B 19/418, G06F 21/64, H04L 9/32

(54) **DATENINTEGRITÄTSPRÜFVERFAHREN**
DATA INTEGRITY TESTING METHOD
PROCÉDÉ DE VÉRIFICATION DE L'INTÉGRITÉ DE DONNÉES

(30) Priorität: 12.03.2019 CH 2992019; 30.08.2019 CH 10972019
(43) Veröffentlichungstag der Anmeldung: 16.09.2020
(73) Patentinhaber: Fr. Sauter AG, 4016 Basel (CH)
(72) Erfinder: Gassmann, Felix, 68220 Leymen (FR)
(74) Vertreter: Bohest AG

(56) Entgegenhaltungen:
- US-A1- 2013 290 729
- US-B1- 10 084 826

## Beschreibung

Die vorliegende Erfindung betrifft ein Verfahren zur Überprüfung der Integrität von in zwei oder mehreren miteinander vernetzten Automationsstationen gespeicherten sicherheitsrelevanten Daten.

Automatisierte Steuerungssysteme weisen oft eine Mehrzahl von vernetzten, in sich aber autonomen, im Folgenden als Automationsstationen bezeichneten Steuerungsmodulen auf, die mit einem eigenen Betriebssystem und darauf laufenden Steuerungsprogrammen ausgestattet sind. Die Automationsstationen besitzen in der Regel Eingänge für diverse Sensoren und Ausgänge für diverse Aktuatoren. Typische Sensoren sind z.B. Temperatursensoren oder Bewegungsmelder, typische Aktuatoren sind z.B. Stellantriebe für z.B. Heizungsventile oder Alarmgeräte. In den Automationsstationen sind üblicherweise auch Betriebsparameter wie z.B. Netzwerkparameter gespeichert. Alle in den Automationsstationen gespeicherten, nicht dynamischen Daten sind im Folgenden gesamthaft als statische Daten bezeichnet. Dynamische Daten sind z.B. variable Sensormesswerte oder Kommunikationsdaten. Die Druckschriften US 10 084 826 B 1 und US 2013/290729 A1 werden als Stand der Technik betrachtet.

Für die Betriebssicherheit des Steuerungssystems ist die Integrität der in den einzelnen Automationsstationen gespeicherten statischen Daten von grösster Wichtigkeit, d.h. dass diese statischen Daten nicht von aussen manipuliert werden können bzw. dass eine Integritätsverletzung sofort erkennbar ist und entsprechende Massnahmen gesetzt werden können. Unter sicherheitsrelevanten Daten sind im Folgenden alle in den Automationsstationen gespeicherten statischen Daten zu verstehen, deren Integrität geprüft bzw. sichergestellt werden soll. Dies können die Gesamtheit aller statischen Daten oder Teile davon sein, beispielsweise etwa nur Programmdaten oder nur Betriebsparameter oder nur Betriebssystemdaten oder Kombinationen von diesen Teilen.

Durch die vorliegende Erfindung soll ein Verfahren angegeben werden, mit welchem die Integrität von in miteinander vernetzten Automationsstationen gespeicherten statischen Daten bzw. sicherheitsrelevanten Teilen davon auf verhältnismässig einfache Weise geprüft werden kann. Dieses Ziel wird durch die im kennzeichnenden Teil des unabhängigen Patentanspruchs 1 aufgeführten Merkmale des erfindungsgemässen Verfahrens erreicht. Vorteilhafte Ausführungsformen bzw. Weiterbildungen sind Gegenstand der abhängigen Patentansprüche.

Das Wesen der Erfindung besteht im Folgenden: Bei einem Verfahren zur Überprüfung der Integrität von in zwei oder mehreren miteinander vernetzten Automationsstationen gespeicherten sicherheitsrelevanten Daten wird in einer Inbetriebsetzungsphase für jede beteiligte Automationsstation nach einem kryptografischen Streuwertfunktionsverfahren ein Hash-Code erzeugt und gespeichert, wobei in die Berechnung der Hash-Codes jeweils die sicherheitsrelevanten statischen Daten der betreffenden Automationsstation und der Hash-Code einer anderen beteiligten Automationsstation oder ein Start-Hash-Code eingehen, so dass die Hash-Codes der beteiligten Automationsstationen miteinander verkettet sind. In nachfolgenden Prüfläufen wird auf die gleiche Weise für jede beteiligte Automationsstation nach demselben kryptografischen Streuwertfunktionsverfahren jeweils ein neuer Hash-Code erzeugt. Die Integritätsprüfung der sicherheitsrelevanten Daten der beteiligten Automationsstationen erfolgt durch Vergleich der in der Inbetriebsetzungsphase gespeicherten Hash-Codes mit den im jeweiligen Prüflauf erzeugten neuen Hash-Codes, wobei eine Integritätsverletzung erkannt wird, wenn die miteinander verglichenen Hash-Codes nicht übereinstimmen.

Durch die Verkettung der Hash-Codes der beteiligten Automationsstationen ist die Überprüfung der Datenintegrität mit verhältnismässig geringem Aufwand möglich.

In einer vorteilhaften Ausführungsform wird die Integrität der in den vernetzten Automationsstationen gespeicherten sicherheitsrelevanten Daten gemeinsam geprüft, wobei in einer Inbetriebsetzungsphase für jede beteiligte Automationsstation in einer vorgegebenen Reihenfolge ein Hash-Code erzeugt und gespeichert wird, in dessen Berechnung jeweils die sicherheitsrelevanten statischen Daten der betreffenden Automationsstation und der Hash-Code der in der Reihenfolge vorangehenden Automationsstation bzw. ein Start-Hash-Code eingehen, so dass die beteiligten Automationsstationen über ihre Hash-Codes miteinander verkettet werden. In nachfolgenden Prüfläufen wird auf die gleiche Weise für jede beteiligte Automationsstation in derselben vorgegebenen Reihenfolge jeweils ein neuer Hash-Code erzeugt. Die Integritätsprüfung erfolgt durch Vergleich des gespeicherten Hash-Codes der in der Reihenfolge letzten Automationsstation mit dem neuen Hash-Code der in der Reihenfolge letzten Automationsstation, wobei eine Integritätsverletzung erkannt wird, wenn die miteinander verglichenen Hash-Codes nicht übereinstimmen. Diese Verfahrensvariante ist besonders einfach, weil die Integritätsprüfung nur einen einzigen Vergleich von Hash-Codes erfordert.

Vorteilhafterweise wird der Start-Hash-Code von Zeit zu Zeit, vorzugsweise zufallsmässig, geändert. Dies erhöht die Sicherheit des Verfahrens.

Vorteilhafterweise wird die für die Verkettung der Automationsstationen festgelegte Reihenfolge von Zeit zu Zeit, vorzugsweise zufallsmässig, geändert. Auch das trägt zur Erhöhung der Sicherheit des Verfahrens bei.

In einer weiteren vorteilhaften Ausführungsform wird die Integrität der in den vernetzten Automationsstationen gespeicherten sicherheitsrelevanten statischen Daten gemeinsam geprüft, wobei in einer verschlüsselten Datenbank je eine digitale Kopie aller Automationsstationen gespeichert wird, welche digitalen Kopien jeweils die sicherheitsrelevanten statischen Daten der einzelnen Automationsstation enthalten. Für jede der beteiligten digitalen Kopien wird in einer vorgegebenen Reihenfolge ein Hash-Code erzeugt und in der Datenbank gespeichert, wobei in die Berechnung der Hash-Codes jeweils die Dateninhalte der betreffenden digitalen Kopie und der Hash-Code der in der Reihenfolge vorangehenden digitalen Kopie bzw. ein Start-Hash-Code eingehen, so dass die beteiligten digitalen Kopien über ihre Hash-Codes miteinander verkettet werden. Für jede beteiligte Automationsstation wird in derselben vorgegebenen Reihenfolge ein Hash-Code erzeugt, in dessen Berechnung jeweils die sicherheitsrelevanten statischen Daten der betreffenden Automationsstation und der Hash-Code der in der Reihenfolge vorangehenden Automationsstation bzw. der Start-Hash-Code eingehen, so dass die beteiligten Automationsstationen über ihre Hash-Codes miteinander verkettet werden. Die Integritätsprüfung erfolgt durch Vergleich des gespeicherten Hash-Codes der in der Reihenfolge letzten digitalen Kopie mit dem Hash-Code der in der Reihenfolge letzten Automationsstation, wobei eine Integritätsverletzung erkannt wird, wenn die miteinander verglichenen Hash-Codes nicht übereinstimmen. Diese Verfahrensvariante ermöglicht die Wiederherstellung (Selbstheilung) korrupter Daten in den Automationsstationen mittels der digitalen Kopien.

Vorteilhafterweise wird dabei die für die Verkettung der Automationsstationen und ihrer digitalen Kopien festgelegte Reihenfolge von Zeit zu Zeit, vorzugsweise zufallsmässig, geändert. Dies erhöht die Sicherheit des Verfahrens.

Vorteilhafterweise wird (auch) der Start-Hash-Code von Zeit zu Zeit, vorzugsweise zufallsmässig, geändert. Auch diese Massnahme erhöht die Sicherheit des Verfahrens.

Ganz besonders vorteilhafterweise wird im Falle einer erkannten Integritätsverletzung die betroffene Automationsstation durch Vergleich der in der Datenbank gespeicherten Hash-Codes der digitalen Kopien mit den von den Automationsstationen berechneten Hash-Codes ermittelt und der Dateninhalt der digitalen Kopie der betroffenen Automationsstation in die betroffene Automationsstation zurückgeschrieben. Auf diese Weise wird der Dateninhalt der betroffenen Automationsstation wieder in seinen ursprünglichen Zustand versetzt (Selbstheilung).

In einer weiteren vorteilhaften Ausführungsform wird in einer Inbetriebsetzungsphase für jede beteiligte Automationsstation in einer vorgegebenen zyklischen Reihenfolge derselben nach einem kryptografischen Streuwertfunktionsverfahren ein Hash-Code erzeugt und in der in der zyklischen Reihenfolge vorangehenden Automationsstation gespeichert, wobei in die Berechnung der Hash-Codes jeweils die sicherheitsrelevanten statischen Daten der betreffenden Automationsstation und der Hash-Code der in der zyklischen Reihenfolge vorangehenden Automationsstation bzw. ein Start-Hash-Code eingehen. In nachfolgenden Prüfläufen wird auf die gleiche Weise für jede beteiligte Automationsstation in derselben vorgegebenen zyklischen Reihenfolge nach demselben kryptografischen Streuwertfunktionsverfahren jeweils ein neuer Hash-Code erzeugt und der in der zyklischen Reihenfolge vorangehenden Automationsstation übergeben. In jeder beteiligten Automationsstation erfolgt die Integritätsprüfung der sicherheitsrelevanten Daten der in der zyklischen Reihenfolge nachfolgenden Automationsstation durch Vergleich des in der Inbetriebsetzungsphase gespeicherten Hash-Codes der in der zyklischen Reihenfolge nachfolgenden Automationsstation mit dem im jeweiligen Prüflauf von der in der zyklischen Reihenfolge nachfolgenden Automationsstation übergebenen Hash-Code, wobei eine Integritätsverletzung erkannt wird, wenn die miteinander verglichenen Hash-Codes nicht übereinstimmen. Bei dieser Verfahrensvariante erfolgt die Integritätsprüfung dezentral in den Automationsstationen, wobei alle beteiligten Automationsstationen gleichberechtigt sind. Dies hat den Vorteil, dass kein zentraler Rechner erforderlich ist und keine der beteiligten Automationsstationen die Rolle eines zentralen Rechners übernehmen (und entsprechend ausgebildet sein) muss.

Vorteilhafterweise werden für jede beteiligte Automationsstation die sicherheitsrelevanten statischen Daten der betreffenden Automationsstation in mindestens einer anderen beteiligten Automationsstation gespeichert. Dies ermöglicht die Wiederherstellung der Daten im Falle einer Integritätsverletzung.

Vorteilhafterweise werden im Falle einer von einer beteiligten Automationsstation erkannten Integritätsverletzung der sicherheitsrelevanten statischen Daten der in der in der Reihenfolge nachfolgenden Automationsstation die in mindestens einer anderen beteiligten Automationsstation gespeicherten sicherheitsrelevanten statischen Daten der betroffenen Automationsstation in die betroffene Automationsstation zurückgeschrieben. Dadurch kann auf einfache Weise der Dateninhalt der Automationsstation in den ursprünglichen Zustand vor dem Auftreten der Integritätsverletzung zurückversetzt werden.

Zweckmässigerweise werden dabei für jede beteiligte Automationsstation die sicherheitsrelevanten statischen Daten der betreffenden Automationsstation in der in der zyklischen Reihenfolge vorangehenden Automationsstation gespeichert.

Vorteilhafterweise werden für jede beteiligte Automationsstation die sicherheitsrelevanten statischen Daten der betreffenden Automationsstation zusätzlich in mindestens einer weiteren beteiligten Automationsstation gespeichert. Durch die so erreichte Mehrfachredundanz der sicherheitsrelevanten statischen Daten wird die Sicherheit der Datenwiederherstellung erhöht.

Im Folgenden wird die Erfindung anhand von in der Zeichnung dargestellten Ausführungsbeispielen näher erläutert. Es zeigen jeweils blockschematisch:
- Fig. 1 -: einen vorbereitenden Schritt eines ersten Ausführungsbeispiels des erfindungsgemässen Verfahrens;
- Fig. 2 -: das Verfahren im fehlerfreien Betrieb;
- Fig. 3 -: das Verfahren bei einem Fehler der Datenintegrität;
- Fig. 4 -: einen Verfahrensschritt zur Isolation des Fehlers;
- Fig. 5 -: einen weiteren Verfahrensschritt zur Fehlerbehandlung;
- Fig. 6 -: einen Verfahrensschritt zur Fehlerbehebung;
- Fig. 7 -: ein vereinfachtes zweites Ausführungsbeispiel des erfindungsgemässen Verfahrens;
- Fig. 8-10 -: Blockschemata von Verfahrensdetails;
- Fig. 11 -: einen vorbereitenden Schritt eines dritten Ausführungsbeispiels des erfindungsgemässen Verfahrens;
- Fig. 12 -: das Verfahren des dritten Ausführungsbeispiels im fehlerfreien Betrieb;
- Fig. 13 -: das Verfahren bei einem Fehler der Datenintegrität in einer Automationsstation; und
- Fig. 14 -: einen Verfahrensschritt zur Wiederherstellung der Datenintegrität.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

Das erfindungsgemässe Verfahren ist für jede Art von Anlagen mit insbesondere mehreren speicherprogrammierten Steuerungsmodulen bzw. Automationsstationen geeignet, beispielsweise etwa in automatisierten Produktions- oder Logistikprozessen oder auch im Bankenwesen.

Nachstehend wird das erfindungsgemässe Verfahren am Beispiel einer Gebäudeautomationsanlage erläutert. Es sind hier beispielsweise fünf Automationsstationen AS1, AS2, AS3, AS4 und AS5 vorgesehen, die jeweils mindestens einen Eingang für einen Sensor und mindestens einen Ausgang für einen Aktuator aufweisen. Alle Automationsstationen sind vernetzt und in jeder Automationsstation sind ein Betriebssystem, mindestens ein darauf laufendes Programm sowie Betriebsparameter, insbesondere Netzwerkparameter, als statische Daten gespeichert. Die Programme steuern die an die Automationsstationen angeschlossenen Aktuatoren, gegebenfalls nach Massgabe der angeschlossenen Sensoren, und führen noch Berechnungen aus, auf die weiter unten noch eingegangen wird. Sensoren und Aktuatoren sind der Einfachheit halber nicht dargestellt. Die Automationsstationen sind über ein nicht dargestelltes Netzwerk untereinander und mit einer übergeordneten Leitzentrale vernetzt. Durch das erfindungsgemässe Verfahren soll die Integrität der in den Automationsstationen gespeicherten statischen Daten (Betriebssystem, Programme, Parameter) oder sicherheitsrelevanten Teilen davon (z.B. nur Programme, nur Betriebsparameter, nur Betriebssystem oder Kombinationen dieser Teile) geprüft bzw. sichergestellt werden.

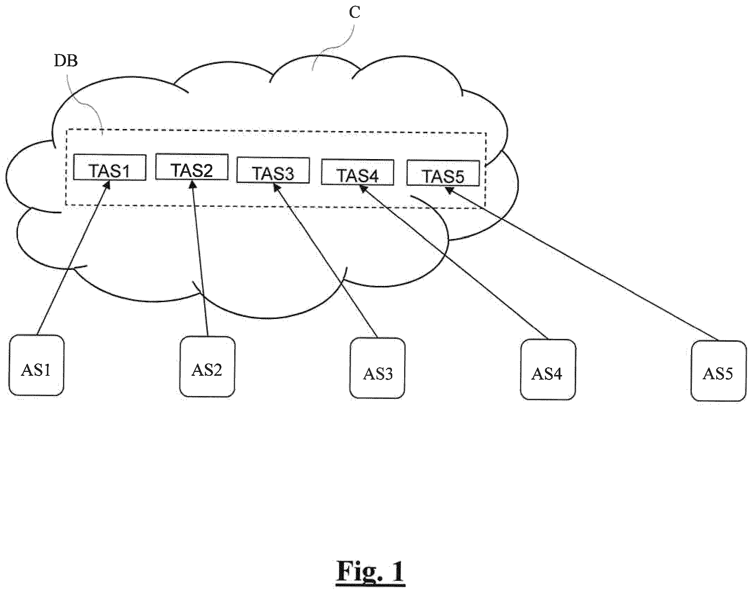

In einem ersten, vorbereitenden Schritt des erfindungsgemässen Verfahrens (Fig. 1) werden von allen Automationsstationen AS1, AS2, AS3, AS4 und AS5 digitale Kopien TAS1, TAS2, TAS3, TAS4 und TAS5 erzeugt und in einer verschlüsselten Datenbank DB gespeichert. Die Durchnummerierung der Automationsstationen ist zufällig und ist unabhängig von der physischen Anordnung der Automationsstationen. Jede digitale Kopie TAS1, TAS2, TAS3, TAS4 und TAS5 enthält die statischen Daten (Betriebssystem, Programme, Parameter oder nur sicherheitsrelevante Teile davon) der zugehörigen physischen Automationsstationen AS1, AS2, AS3, AS4 und AS5. Die verschlüsselte Datenbank ist in einer Cloud C gespeichert. Unter Cloud C ist in diesem Zusammenhang ein kryptographisch geschützter Speicherbereich irgendeines Rechners bzw. Servers zu verstehen, z.B. auch desjenigen Rechners oder Servers, der für die Vernetzung der Automationsstationen zuständig ist. Die verschlüsselte Datenbank kann auch direkt in einer der Automationsstationen AS1, AS2, AS3, AS4 oder AS5 oder einer weiteren Automationsstation gespeichert sein.

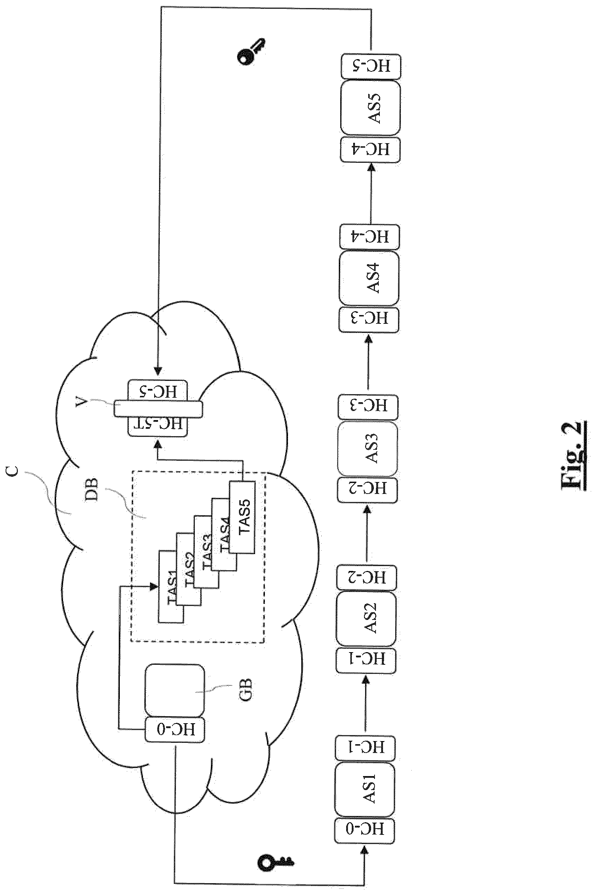

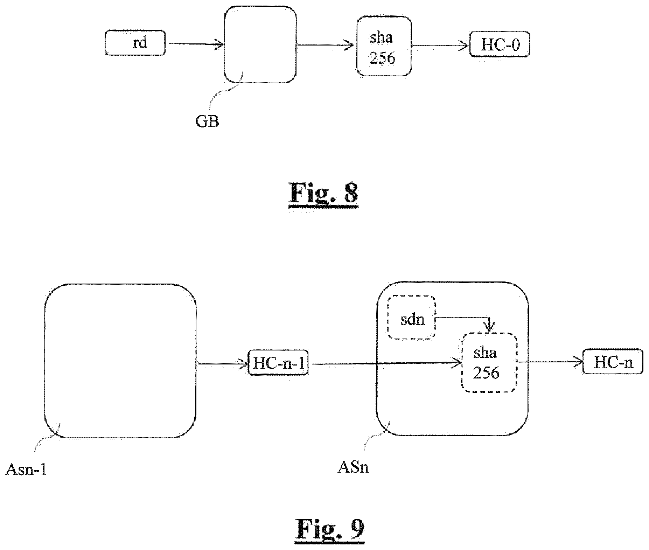

In der Cloud C ist ein als Genesis-Block bezeichneter Datenblock GB mit beliebig veränderbarem Dateninhalt gespeichert (Fig. 2). Aus dem Dateninhalt des Genesis-Blocks GB wird nach einem bekannten kryptographischen Streuwertfunktionsverfahren, z.B. dem sha256-Verfahren, ein Start-Hash-Code HC-0 berechnet und gesichert (verschlüsselt) an die erste Automationsstation AS1 übergeben. Im Detail ist dies in Fig. 8 illustriert. Mit rd sind darin in den Genesis-Block GB eingeschriebene Zufallsdaten bezeichnet, mit sha256 ist ein (softwareimplementierter) Hashcode-Generator bezeichnet.

Die erste Automationsstation AS 1 berechnet aus den in ihr gespeicherten statischen Daten (bzw. sicherheitsrelevanten Teilen davon) und dem Start-Hash-Code HC-0 nach demselben kryptografischen Streuwertfunktionsverfahren einen Hash-Code HC-1, der (über die Vernetzung der Automationsstationen) an die Automationsstation AS2 übergeben wird. Diese berechnet in analoger Weise aus den in ihr gespeicherten statischen Daten und dem Hash-Code HC-1 wieder nach demselben Verfahren einen Hash-Code HC-2. In analoger Weise berechnen die übrigen Automationsstationen AS3, AS4 und AS5 jeweils aus den in ihnen gespeicherten statischen Daten und den ihnen zugeführten Hash-Codes der vorangehenden Automationsstationen Hash-Codes HC-3, HC-4 und HC-5. Die Automationsstationen sind also über ihre Hash-Codes miteinander verkettet. Im Detail ist dies in Fig. 9 illustriert. Mit n ist die Nummer einer Automationsstation ASn und des von dieser erzeugten Hash-Codes HC-n indiziert, mit n-1 ist die Nummer des in der Berechnungsabfolge der Automationsstation ASn vorangehenden Automationsstation ASn-1 und des von dieser erzeugten Hash-Codes HC-n-1 indiziert. Mit sdn sind die in der Automationsstation ASn gespeicherten statischen Daten (bzw. der sicherheitsrelevanten Teile derselben) bezeichnet.

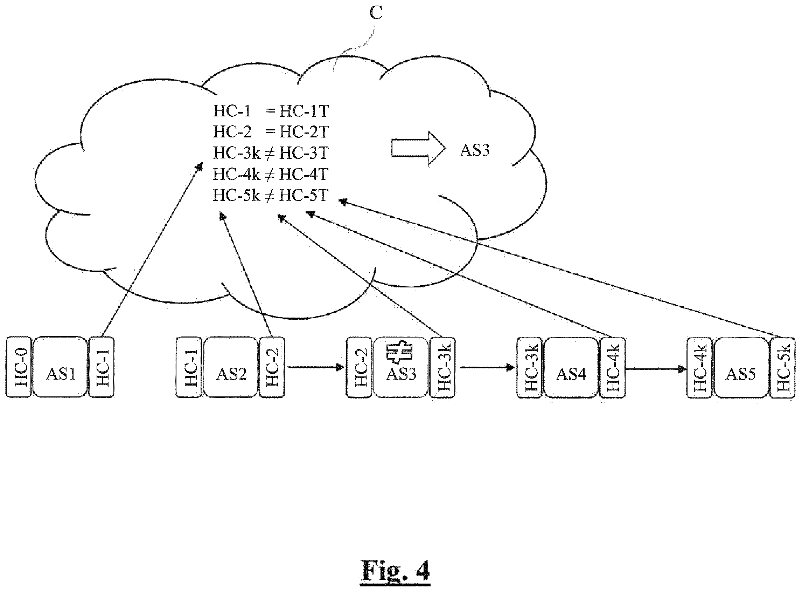

In analoger Weise werden in der Cloud C aus dem Start-Hash-Code HC-0 und dem Dateninhalt der digitalen Kopie TAS 1 der Automationsstation AS 1 ein Hash-Code HC-1T und so weiter Hash-Codes HC-2T, HC-3T, HC-4T und HC-5T berechnet und in der verschlüsselten Datenbank DB gespeichert (siehe auch Fig. 4). Somit sind auch die digitalen Kopien TAS1, TAS2, TAS3, TAS4 und TAS5 der Automationsstationen AS1, AS2, AS3, AS4 und AS5 über ihre Hash-Codes HC-1T, HC-2T, HC-3T, HC-4T und HC-5T miteinander verkettet.

Für die im Folgenden als Prüflauf bezeichnete Integritätsprüfung wird der von der Automationsstation AS5 erzeugte Hash-Code HC-5 in gesicherter (verschlüsselter) Form der Cloud C übergeben. In der Cloud C findet ein Vergleich mit dem übergebenen Hash-Code HC-5 und dem dort aus den digitalen Kopien der Automationsstationen berechneten Hasc-Code HC-5T statt. Der Vergleichsschritt ist durch den Kasten V symbolisiert (siehe Fig. 2). Wenn der von den physischen Automationsstationen berechnete (in der Berechnungsabfolge letzte) Hash-Code HC-5 mit dem aus den digitalen Kopien der Automationsstationen berechneten (in der Berechnungsabfolge letzten) Hash-Code HC-5T übereinstimmt, ist die Integrität der in den physischen Automationsstationen gespeicherten Daten gegeben. Andernfalls werden Massnahmen ergriffen, auf die weiter unten noch eingegangen wird.

Die vorstehend beschriebene Überprüfung der Datenintegrität (Prüflauf) wird laufend wiederholt, beispielsweise alle 5 Minuten. Dabei kann jedes Mal oder von Zeit zu Zeit (z.B. nach einer festgelegten Anzahl von Prüfdurchläufen) der Dateninhalt des Genesis-Blocks GB geändert werden, so dass sich alle Hash-Codes entsprechend verändern. Der Dateninhalt des Genesis-Blocks GB kann beispielsweise eine neu generierte Zufallszahl sein. Es ist auch möglich, als Start-Hash-Code HC-0 direkt, d.h. ohne den Umweg über den Genesis-Block GB, eine Zufallszahl passenden Formats zu benutzen.

Es ist auch möglich, in der Berechnungsabfolge die Reihenfolge der Automationsstationen AS 1-AS5 und entsprechend auch von deren digitalen Kopien TAS1-TAS5 für jeden Prüflauf oder von Zeit zu Zeit (z.B. nach einer festgelegten Anzahl von Prüfläufen) zu ändern. Beide Massnahmen, die Änderung des Genesis-Blocks GB bzw. des Start-Hash-Codes HC-0 und die Änderung der Reihenfolge der Automationsstationen, führen zu einer weiteren Erhöhung der Integritätssicherheit.

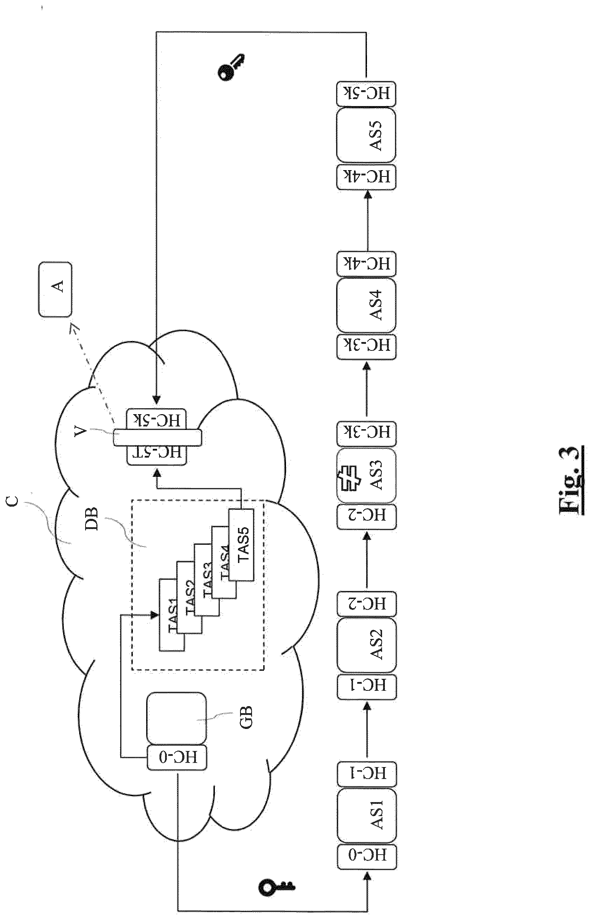

In Fig. 3 ist eine Situation dargestellt, in welcher in der Automationsstation AS3 ein Fehler eingetreten ist. Dieser Fehler kann durch Ausfall der Automationsstation selbst oder durch (unerlaubte) Manipulation (Veränderung) der in der Automationsstation AS3 gespeicherten statischen Daten verursacht sein. Der Fehler führt zwangsläufig dazu, dass der von der Automationsstation AS3 berechnete oder durch den Ausfall der Automationsstation AS3 überhaupt nicht berechnete, also fehlende Hash-Code HC-3k und in der Folge auch die beiden folgenden Hash-Codes HC-4k und HC-5k nicht mehr korrekt sind, d.h. nicht mit den entsprechenden Hash-Codes HC-3T, HC-4T und HC-5T der digitalen Kopien der Automationsstationen übereinstimmen. Der Anhang k in der Bezeichnung der Hash-Codes in der Fig. 3 deutet einen inkorrekten Wert an. Dass ein Fehler der Datenintegrität aufgetreten ist, ist durch den Vergleich der beiden (in der Berechnungsabfolge letzten) Hash-Codes HC-5k und HC-5T sofort erkennbar. Es wird dann z.B. ein Alarm A ausgelöst und ermittelt, in welcher Automationsstation die Ursache dafür liegt. Dies ist nachstehend anhand der Fig. 4 erläutert.

Bei Feststellung einer verletzten Datenintegrität werden alle Automationsstationen veranlasst, ihre Hash-Codes in die Cloud C zu schicken. Dort werden die Hash-Codes mit den dort gespeicherten Hash-Codes der digitalen Kopien der Automationsstationen verglichen und anhand dieser Vergleiche kann festgestellt werden, in welcher der Automationsstationen der Fehler aufgetreten ist. Im vorliegenden Beispiel war das die Automationsstation AS3.

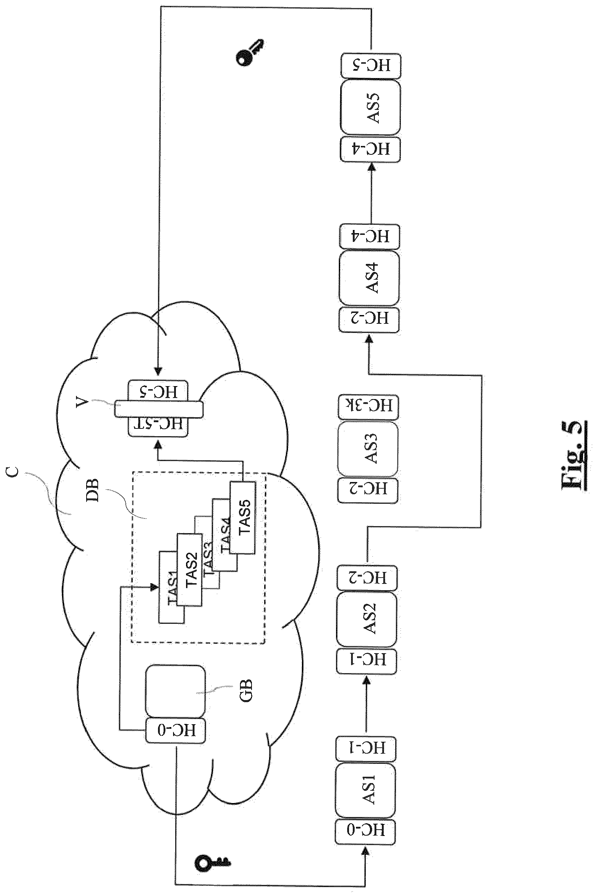

In der Folge (Fig. 5) werden die fehlerbehaftete Automationsstation (hier AS3) und die zugehörige digitale Kopie TAS3 aus der nächsten Berechnungsabfolge ausgeklammert, so dass dann die (in der Abfolge letzten) Hash-Codes HC-5 und HC-5T wieder übereinstimmen.

Die fehlerbehaftete Automationsstation AS3 wird dann ausgewechselt und das ganze System wird, wie anhand der Figuren 1 und 2 beschrieben, neu in Betrieb gesetzt. Falls das System durch zusätzliche Automationsstationen ergänzt oder falls einzelne Automationsstationen aus dem Verbund entfernt werden, wird sinngemäss gleich vorgegangen. Falls eine Automationsstation aus dem System entfernt wird, wird auch die zugehörige digitale Kopie aus der Datenbank DB entfernt. Falls eine zusätzliche Automationsstation in das System eingefügt wird, wird eine entsprechende digitale Kopie derselben in der Datenbank DB angelegt.

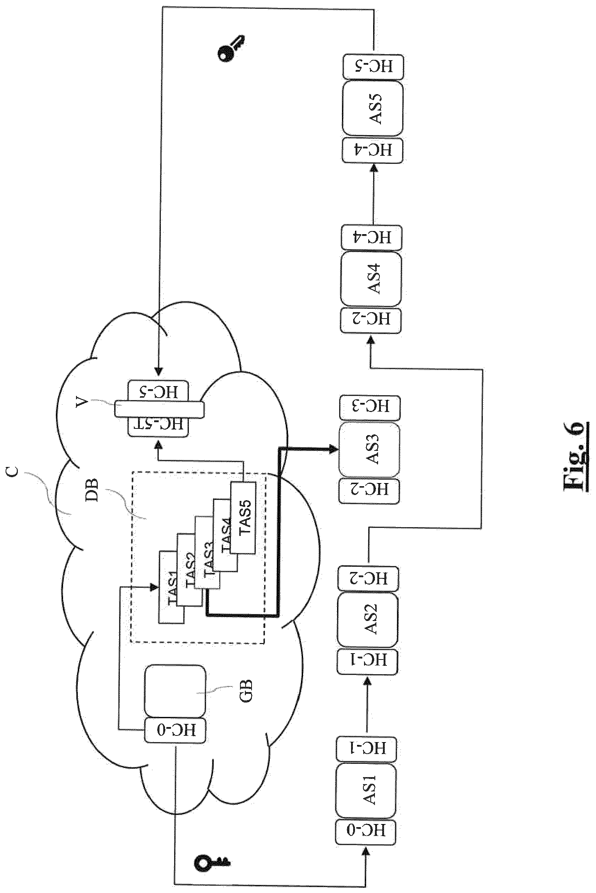

In Fig. 6 ist dargestellt, wie eine fehlerbehaftete Automationsstation, hier beispielsweise AS3, wieder auf den Original-Zustand zurückgesetzt werden kann. Bei zunächst ausgeklammerter Automationsstation AS3 wird der Dateninhalt der entsprechenden digitalen Kopie TAS3 der Automationsstation AS3 aus der Cloud C heruntergeladen und in die Automationsstation AS3 geschrieben, wobei die dort vorhandenen Daten überschrieben werden. Es kommt dabei gewissermassen zu einer Selbstheilung der betroffenen Automationsstation. Anschliessend wird die so wiederhergestellte Automationsstation AS3 in einem neuen Inbetriebsetzungslauf wieder in das System eingegliedert, so dass die Verhältnisse wieder den in Fig. 2 dargestellten entsprechen.

Die Cloud C kann, wie schon erwähnt, auf jedem beliebigen Rechner bzw. Server, auf den die Automationsstationen (gesicherten) Zugriff haben, laufen. Falls zumindest eine der am System beteiligten Automationsstationen mit ausreichenden Speicher-Resourcen und entsprechender Software ausgestattet ist, kann auch diese Automationsstation die Cloud C und die darin enthaltenenen Elemente, insbesondere die verschlüsselte Datenbank DB und die Selbstheilungsfunktion implementieren.

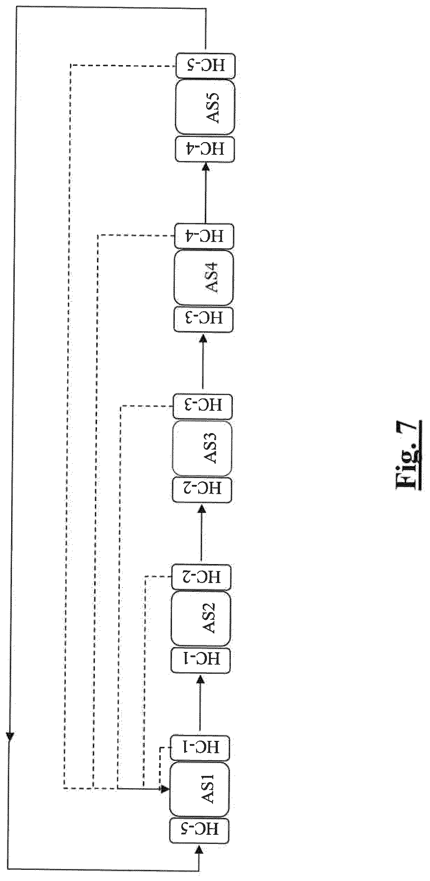

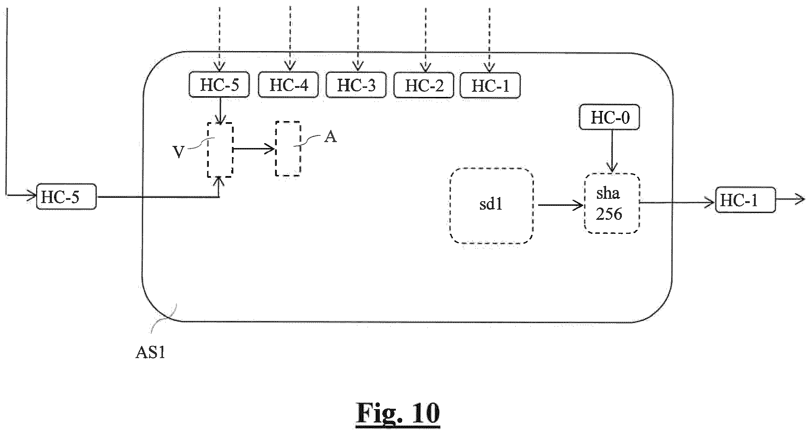

In Fig. 7 und der zugehörigen Detaildarstellung der Fig. 10 ist eine vereinfachte Ausführungsform des erfindungsgemässen Verfahrens dargestellt. Hierbei fehlt die Cloud und die in dieser abgelegte Datenbank mit digitalen Kopien der physischen Automationsstationen AS 1, AS2, AS3, AS4 und ASS. Stattdessen übernimmt eine der Automationsstationen, hier im Beispiel die Automationsstation AS 1, die Führungsrolle (Master-Automationsstation) und generiert aus einem Start-Hash-Code HC-0 und den in ihr gespeicherten statischen Daten sd1 bzw. sicherheitsrelevanten Teilen davon einen ersten Hash-Code HC-1, den sie (über die Vernetzung der Automationsstationen) an die zweite Automationsstation AS2 übergibt. Diese und die weiteren Automationsstationen AS2-AS5 erzeugen aus den jeweils in ihnen gespeicherten statischen Daten bzw. sicherheitsrelevanten Teilen davon und den ihnen von der jeweils vorangehenden Automationsstation zugeführten Hash-Codes weitere Hash-Codes HC-2, HC-3, HC-4 und HC-5. Während der Inbetriebsetzungsphase werden alle (hier beispielsweise fünf) Hash-Codes in der in der Abfolge ersten (Master-)Automationsstation AS1 gespeichert. In der Fig. 7 ist dies durch die strichlierten Linien angedeutet. In den anschliessenden Integritätsprüfungsläufen (siehe Fig. 10) wird nur noch der in der Abfolge letzte Hash-Code HC-5 in die in der Abfolge erste Automationsstation AS 1 zurückgeführt und dort mit dem bereits in der Inbetriebsetzungsphase gespeicherten Hash-Code HC-5 verglichen. Falls die Hash-Codes übereinstimmen, liegt keine Integritätsverletzung vor. Andernfalls wird beispielsweise ein Alarm A ausgelöst.

Die Rolle der Master-Automationsstation wird nach dem Zufallsprinzip und nach beliebigen Zyklen (Integritätsprüfungsdurchläufen) an eine der beteiligten Automationsstationen vergeben. Auch hier kann die Reihenfolge der Automationsstationen für den Berechnungsablauf beliebig geändert werden, und auch der Start-Hash-Code HC-0 kann geändert werden, wobei die einzelnen Hash-Codes wieder in der Master-Automationsstation gespeichert werden müssen.

Im Falle einer Integritätsverletzung wird analog zu dem anhand der Fig. 4 beschriebenen Verfahren vorgegangen, d.h. die einzelnen Hash-Codes der beteiligten Automationsstationen werden mit den in der Master-Automationsstation gespeicherten Hash-Codes verglichen und aus dem Vergleichsergebnis wird die fehlerbehaftete Automationsstation ermittelt. Bezüglich des Ersatzes einer fehlerbehafteten Automationsstation, der Entfernung einer Automationsstation aus dem System oder der Hinzunahme einer weiteren Automationsstation wird analog vorgegangen wie schon im Zusammenhang mit dem ersten Ausführungsbeispiel beschrieben. Eine "Selbstheilung" ist natürlich aufgrund der fehlenden digitalen Kopien der Automationsstationen nicht möglich.

Vorstehend wurde erläutert, dass die Integritätsprüfung bezüglich aller in den Automationsstationen gespeicherten statischen Daten oder nur bezüglich sicherheitsrelevanter Teile davon erfolgt. Es ist natürlich auch möglich, die Integritätsprüfung in getrennten Durchgängen bezüglich sicherheitsrelevanter Teile der statischen Daten durchzuführen, z.B. in einem Durchgang nur Programmdaten, in einem anderen Durchgang nur Betriebsparameter und so fort.

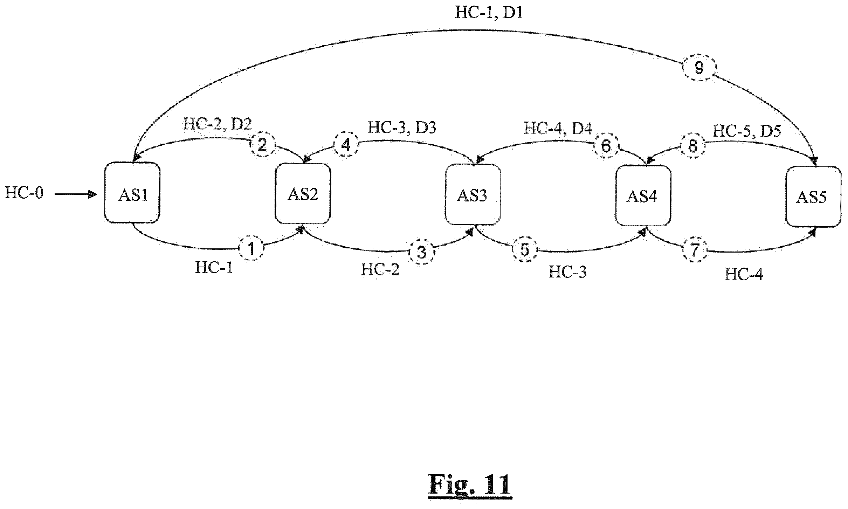

In den Figuren 11-14 ist ein weiteres Ausführungsbeispiel des erfindungsgemässen Verfahrens dargestellt, das ebenfalls ohne Cloud auskommt und bei dem die Prüfung der Datenintegrität dezentral direkt in den beteiligten Automationsstationen erfolgt.

Alle hier z.B. fünf beteiligten Automationsstationen AS1, AS2, AS3, AS4 und AS5 sind (softwaremässig über ihre Vernetzung) in einer geschlossenen Kette bzw. einer zyklischen Reihenfolge zusammengeschlossen, wobei die Durchnummerierung der Automationsstationen wieder willkürlich und unabhängig von der physischen Anordnung der Automationsstationen ist. Bezüglich der Automationsstation AS5 ist die Automationsstation AS1 in der zyklischen Reihenfolge nachfolgend und bezüglich der Automationsstation AS1 ist die Automationsstation AS5 in der zyklischen Reihenfolge vorangehend.

In einer in Fig. 11 dargestellten Inbetriebsetzungsphase findet in (hier im Beispiel neun) Schritten 1-9 ein Datenaustausch zwischen den beteiligten Automationsstationen statt. Die einzelnen Schritte sind in Fig. 11 durch strichlierte Kreise mit entsprechenden Schrittnummern symbolisiert.

Die Automationsstation AS1 übergibt den von ihr aus den in ihr enthaltenen sicherheitsrelevanten Daten D1 und einem Start-Hashcode HC-0 erzeugten Hash-Code HC-1 an die in der zyklischen Reihenfolge nachfolgende Automationsstation AS2 (Schritt 1). Diese berechnet daraus und aus den in ihr enthaltenen sicherheitsrelevanten Daten D2 den Hash-Code HC-2 und übergibt diesen zusammen mit den sicherheitsrelevanten Daten D2 an die in der zyklischen Reihenfolge vorangehende Automationsstation AS1, wo diese gespeichert werden (Schritt 2). Ferner übergibt die Automationsstation AS2 ihren Hash-Code HC-2 an die in der zyklischen Reihenfolge nachfolgende Automationsstation AS3 (Schritt 3). In analoger Weise berechnet die Automationsstation AS3 daraus und aus den in ihr enthaltenen sicherheitsrelevanten Daten D3 den Hash-Code HC-3 und übergibt diesen zusammen mit den sicherheitsrelevanten Daten D3 an die in der zyklischen Reihenfolge vorangehende Automationsstation AS2, wo diese gespeichert werden (Schritt 4). Ferner übergibt die Automationsstation AS3 ihren Hash-Code HC-3 an die in der zyklischen Reihenfolge nachfolgende Automationsstation AS4 (Schritt 5). In analoger Weise berechnet die Automationsstation AS4 daraus und aus den in ihr enthaltenen sicherheitsrelevanten Daten D4 den Hash-Code HC-4 und übergibt diesen zusammen mit den sicherheitsrelevanten Daten D4 an die in der zyklischen Reihenfolge vorangehende Automationsstation AS3, wo diese gespeichert werden (Schritt 6). Ferner übergibt die Automationsstation AS4 ihren Hash-Code HC-4 an die in der zyklischen Reihenfolge nachfolgende Automationsstation AS5 (Schritt 7). In analoger Weise berechnet die Automationsstation AS5 daraus und aus den in ihr enthaltenen sicherheitsrelevanten Daten D5 den Hash-Code HC-5 und übergibt diesen zusammen mit den sicherheitsrelevanten Daten D5 an die in der zyklischen Reihenfolge vorangehende Automationsstation AS4, wo diese gespeichert werden (Schritt 8). Schliesslich übergibt die Automationsstation AS1 ihren Hash-Code HC-1 und die in ihr enthaltenen sicherheitsrelevanten Daten D1 an die in der zyklischen Reihenfolge vorangehende Automationsstation AS 5, wo diese gespeichert werden (Schritt 9). Somit enthält nun nach Abschluss der Inbetriebsetzungsphase jede beteiligte Automationsstation neben ihren eigenen sicherheitsrelevanten Daten auch die sicherheitsrelevanten Daten und den Hash-Code der in der zyklischen Reihenfolge nachfolgenden Automationsstation.

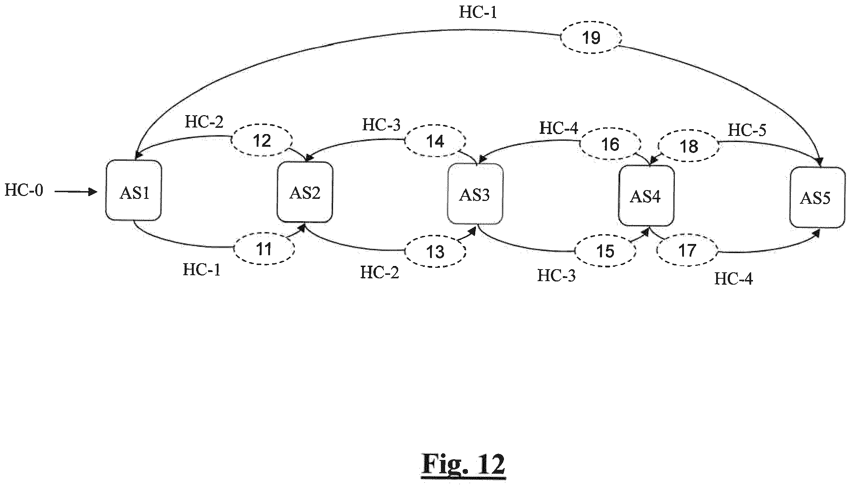

Die Fig. 12 zeigt das Verfahren in einem Integritätsprüflauf ohne Integritätsverletzung der Daten in den Automationsstationen. Die einzelnen Verfahrensschritte sind in der Fig. 12 wieder durch strichlierte Kreise mit entsprechenden Schrittnummern symbolisiert.

Die Automationsstation AS1 übergibt den von ihr aus den in ihr enthaltenen sicherheitsrelevanten Daten D1 und dem Start-Hashcode HC-0 erzeugten Hash-Code HC-1 an die in der zyklischen Reihenfolge nachfolgende Automationsstation AS2 (Schritt 11). Diese berechnet daraus und aus den in ihr enthaltenen sicherheitsrelevanten Daten D2 den Hash-Code HC-2 und übergibt diesen an die in der zyklischen Reihenfolge vorangehende Automationsstation AS1, wo dieser mit dem in der Inbetriebsetzungsphase gespeicherten Hash-Code HC-2 verglichen wird (Schritt 12). In analoger Weise übergibt die Automationsstation AS2 den von ihr erzeugten Hash-Code HC-2 an die in der zyklischen Reihenfolge nachfolgende Automationsstation AS3 (Schritt 13). Diese berechnet daraus und aus den in ihr enthaltenen sicherheitsrelevanten Daten D3 den Hash-Code HC-3 und übergibt diesen an die in der zyklischen Reihenfolge vorangehende Automationsstation AS2, wo dieser mit dem in der Inbetriebsetzungsphase gespeicherten Hash-Code HC-3 verglichen wird (Schritt 14). In analoger Weise übergibt die Automationsstation AS3 den von ihr erzeugten Hash-Code HC-3 an die in der zyklischen Reihenfolge nachfolgende Automationsstation AS4 (Schritt 15). Diese berechnet daraus und aus den in ihr enthaltenen sicherheitsrelevanten Daten D4 den Hash-Code HC-4 und übergibt diesen an die in der zyklischen Reihenfolge vorangehende Automationsstation AS3, wo dieser mit dem in der Inbetriebsetzungsphase gespeicherten Hash-Code HC-4 verglichen wird (Schritt 16). In analoger Weise übergibt die Automationsstation AS4 den von ihr erzeugten Hash-Code HC-4 an die in der zyklischen Reihenfolge nachfolgende Automationsstation AS5 (Schritt 17).

Diese berechnet daraus und aus den in ihr enthaltenen sicherheitsrelevanten Daten D5 den Hash-Code HC-5 und übergibt diesen an die in der zyklischen Reihenfolge vorangehende Automationsstation AS4, wo dieser mit dem in der Inbetriebsetzungsphase gespeicherten Hash-Code HC-5 verglichen wird (Schritt 18). Die Automationsstation AS1 übergibt den von ihr erzeugten Hash-Code HC-1 an die in der zyklischen Reihenfolge vorangehende Automationsstation ASS, wo dieser mit dem in der Inbetriebsetzungsphase gespeicherten Hash-Code HC-1 verglichen wird (Schritt 19).

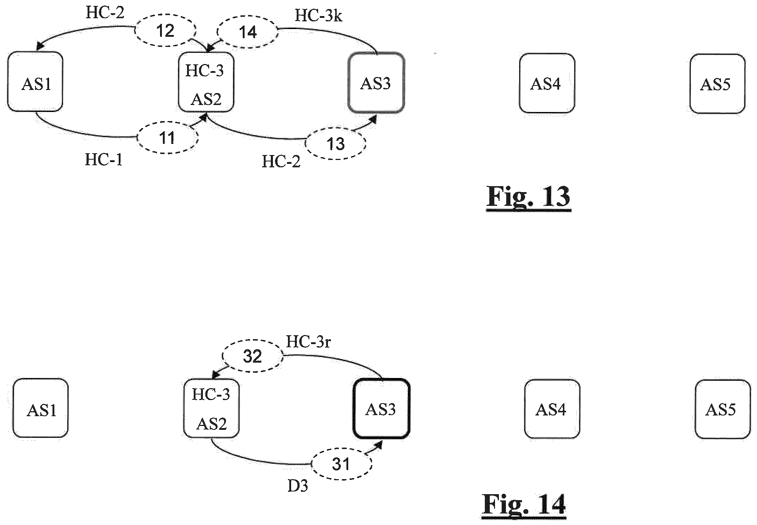

Der beschriebene Prüflauf wird in vorgegebenen zeitlichen Abständen wiederholt, bis in einer der Automationsstationen AS1-AS5 eine Integritätsverletzung auftritt. In Fig. 13 ist eine solche Situation dargestellt, wobei die Automationsstation AS2 festgestellt hat, dass der in der Inbetriebsetzungsphase gespeicherte Hash-Codes HC-3 der nachfolgenden Automationsstation AS3 mit dem von der Automationsstation AS3 im Prüflauf erzeugten, hier mit HC-3k bezeichneten Hash-Code nicht übereinstimmt und somit eine Integritätsverletzung in der Automationsstation AS3 vorliegt.

Im Falle einer Integritätsverletzung kann z.B. ein Alarm ausgelöst werden. Da aber die sicherheitsrelevanten Daten der Automationsstationen in jeweils einer anderen Automationsstation gespeichert sind, können diese gespeicherten sicherheitsrelevanten Daten dazu benutzt werden, die korrupte Automationsstation wieder in den Originalzustand zu versetzen, so wie dies in Fig. 14 vereinfacht dargestellt ist.

Im Falle, dass die Automationsstation AS3 korrumpiert ist, werden in einem Schritt 31 die in der Automationsstation AS2 gespeicherten sicherheitsrelevanten Daten D3 der Automationsstation AS3 in diese zurückgeschrieben. Die Automationsstation AS3 berechnet daraufhin einen neuen, hier mit HC-3r bezeichneten Hash-Code und übergibt diesen in einem Schritt 32 an die in der zyklischen Reihenfolge vorangehende Automationsstation AS2. Dort wird der gespeicherte Hash-Code HC-3 und dem neuen Hash-Code HC-3r verglichen. Bei Übereinstimmung der verglichenen Hash-Codes wird der Prüflauf wieder normal fortgesetzt.

Im vorstehend beschriebenen Ausführungsbeispiel sind die sicherheitsrelevanten Daten der Automationsstationen einfach redundant vorhanden, d.h. die Daten der einzelnen Automationsstationen sind ausser in ihnen selbst jeweils nur noch in einer der anderen Automationsstationen gespeichert. Zur Verbesserung der Datensicherheit kann das Verfahren aber auch mehrfach redundant ausgebildet sein, wobei dann die sicherheitsrelevanten Daten jeder Automationsstation zusätzlich noch in einer oder mehreren weiteren der jeweils anderen Automationsstationen gespeichert werden.

Bezüglich des Ersatzes einer fehlerbehafteten Automationsstation, der Entfernung einer Automationsstation aus dem System oder der Hinzunahme einer weiteren Automationsstation wird analog vorgegangen wie schon im Zusammenhang mit dem ersten Ausführungsbeispiel beschrieben.

## Patentansprüche

1. Verfahren zur Überprüfung der Integrität von in zwei oder mehreren miteinander vernetzten Automationsstationen (AS1, AS2, AS3, AS4, AS5) gespeicherten sicherheitsrelevanten Daten (D1, D2, D3, D4, D5), **dadurch gekennzeichnet, dass** in einer Inbetriebsetzungsphase für jede beteiligte Automationsstation (AS1, AS2, AS3, AS4, AS5) nach einem kryptografischen Streuwertfunktionsverfahren ein Hash-Code (HC-1, HC-2, HC-3, HC-4, HC-5) erzeugt und gespeichert wird, wobei in die Berechnung der Hash-Codes jeweils die sicherheitsrelevanten statischen Daten (D1, D2, D3, D4, D5) der betreffenden Automationsstation (AS1, AS2, AS3, AS4, AS5) und der Hash-Code (HC-1, HC-2, HC-3, HC-4, HC-5) einer anderen beteiligten Automationsstation oder ein Start-Hash-Code (HC-0) eingehen, so dass die Hash-Codes der beteiligten Automationsstationen miteinander verkettet sind, dass in nachfolgenden Prüfläufen auf die gleiche Weise für jede beteiligte Automationsstation nach demselben kryptografischen Streuwertfunktionsverfahren jeweils ein neuer Hash-Code (HC-1, HC-2, HC-3, HC-4, HC-5) erzeugt wird, und dass die Integritätsprüfung der sicherheitsrelevanten Daten (D1, D2, D3, D4, D5) der beteiligten Automationsstationen durch Vergleich der in der Inbetriebsetzungsphase gespeicherten Hash-Codes mit den im jeweiligen Prüflauf erzeugten neuen Hash-Codes erfolgt, wobei eine Integritätsverletzung erkannt wird, wenn die miteinander verglichenen Hash-Codes nicht übereinstimmen.

2. Verfahren nach Anspruch 1, **dadurch gekennzeichnet, dass** die Integrität der in den vernetzten Automationsstationen (AS1, AS2, AS3, AS4, AS5) gespeicherten sicherheitsrelevanten Daten gemeinsam geprüft wird, wobei in einer Inbetriebsetzungsphase für jede beteiligte Automationsstation in einer vorgegebenen Reihenfolge ein Hash-Code (HC-1, HC-2, HC-3, HC-4, HC-5) erzeugt und gespeichert wird, in dessen Berechnung jeweils die sicherheitsrelevanten statischen Daten der betreffenden Automationsstation und der Hash-Code (HC-1, HC-2, HC-3, HC-4) der in der Reihenfolge vorangehenden Automationsstation bzw. ein Start-Hash-Code (HC-0) eingehen, so dass die beteiligten Automationsstationen über ihre Hash-Codes (HC-1, HC-2, HC-3, HC-4, HC-5) miteinander verkettet werden, dass in nachfolgenden Prüfläufen auf die gleiche Weise für jede beteiligte Automationsstation in derselben vorgegebenen Reihenfolge jeweils ein neuer Hash-Code (HC-1, HC-2, HC-3, HC-4, HC-5) erzeugt wird, und dass die Integritätsprüfung durch Vergleich des gespeicherten Hash-Codes (HC-5) der in der Reihenfolge letzten Automationsstation (AS5) mit dem neuen Hash-Code (HC-5) der in der Reihenfolge letzten Automationsstation (AS5) erfolgt, wobei eine Integritätsverletzung erkannt wird, wenn die miteinander verglichenen Hash-Codes nicht übereinstimmen.

3. Verfahren nach Anspruch 2, **dadurch gekennzeichnet, dass** der Start-Hash-Code (HC-0) von Zeit zu Zeit, vorzugsweise zufallsmässig, geändert wird.

4. Verfahren nach Anspruch 2 oder 3, **dadurch gekennzeichnet, dass** die für die Verkettung der Automationsstationen (AS1, AS2, AS3, AS4, AS5) festgelegte Reihenfolge von Zeit zu Zeit, vorzugsweise zufallsmässig, geändert wird.

5. Verfahren nach Anspruch 1, **dadurch gekennzeichnet, dass** die Integrität der in den vernetzten Automationsstationen (AS1, AS2, AS3, AS4, AS5) gespeicherten sicherheitsrelevanten statischen Daten gemeinsam geprüft wird, wobei in einer verschlüsselten Datenbank (DB) je eine digitale Kopie (TAS1, TAS2, TAS3, TAS4, TAS5) aller Automationsstationen (AS1, AS2, AS3, AS4, AS5) gespeichert wird, welche digitalen Kopien jeweils die sicherheitsrelevanten statischen Daten der einzelnen Automationsstation (AS1, AS2, AS3, AS4, AS5) enthalten, wobei für jede der beteiligten digitalen Kopien (TAS1, TAS2, TAS3, TAS4, TAS5) in einer vorgegebenen Reihenfolge ein Hash-Code (HC-1T, HC-2T, HC-3T, HC-4T, HC-5T) erzeugt und in der Datenbank (DB) gespeichert wird, wobei in die Berechnung der Hash-Codes jeweils die Dateninhalte der betreffenden digitalen Kopie (TAS1, TAS2, TAS3, TAS4, TAS5) und der Hash-Code (HC-1T, HC-2T, HC-3T, HC-4T) der in der Reihenfolge vorangehenden digitalen Kopie bzw. ein Start-Hash-Code (HC-0) eingehen, so dass die beteiligten digitalen Kopien (TAS1, TAS2, TAS3, TAS4, TAS5) über ihre Hash-Codes (HC-1T, HC-2T, HC-3T, HC-4T, HC-5T) miteinander verkettet werden, dass für jede beteiligte Automationsstation (AS1, AS2, AS3, AS4, AS5) in derselben vorgegebenen Reihenfolge ein Hash-Code (HC-1, HC-2, HC-3, HC-4, HC-5) erzeugt wird, in dessen Berechnung jeweils die sicherheitsrelevanten statischen Daten der betreffenden Automationsstation und der Hash-Code (HC-1, HC-2, HC-3, HC-4) der in der Reihenfolge vorangehenden Automationsstation bzw. der Start-Hash-Code (HC-0) eingehen, so dass die beteiligten Automationsstationen über ihre Hash-Codes (HC-1, HC-2, HC-3, HC-4, HC-5) miteinander verkettet werden, und dass die Integritätsprüfung durch Vergleich des gespeicherten Hash-Codes (HC-5T) der in der Reihenfolge letzten digitalen Kopie (TAS5) mit dem Hash-Code (HC-5) der in der Reihenfolge letzten Automationsstation (AS5) erfolgt, wobei eine Integritätsverletzung erkannt wird, wenn die miteinander verglichenen Hash-Codes nicht übereinstimmen.

6. Verfahren nach Anspruch 5, **dadurch gekennzeichnet, dass** die für die Verkettung der Automationsstationen (AS1, AS2, AS3, AS4, AS5) und ihrer digitalen Kopien (TAS1, TAS2, TAS3, TAS4, TAS5) festgelegte Reihenfolge von Zeit zu Zeit, vorzugsweise zufallsmässig, geändert wird.

7. Verfahren nach Anspruch 5 oder 6, **dadurch gekennzeichnet, dass** der Start-Hash-Code (HC-0) von Zeit zu Zeit, vorzugsweise zufallsmässig, geändert wird.

8. Verfahren nach einem der Ansprüche 5-7, **dadurch gekennzeichnet, dass** im Falle einer erkannten Integritätsverletzung die betroffene Automationsstation (AS3) durch Vergleich der in der Datenbank (DB) gespeicherten Hash-Codes (HC-1T, HC-2T, HC-3T, HC-4T, HC-5T) der digitalen Kopien (TAS1, TAS2, TAS3, TAS4, TAS5) mit den von den Automationsstationen (AS1, AS2, AS3, AS4, AS5) berechneten Hash-Codes (HC-1, HC-2, HC-3, HC-4, HC-5) ermittelt wird, und dass der Dateninhalt der digitalen Kopie (TAS3) der betroffenen Automationsstation (AS3) in die betroffene Automationsstation (AS3) zurückgeschrieben wird.

9. Verfahren nach Anspruch 1, **dadurch gekennzeichnet, dass** in einer Inbetriebsetzungsphase für jede beteiligte Automationsstation (AS1, AS2, AS3, AS4, AS5) in einer vorgegebenen zyklischen Reihenfolge derselben nach einem kryptografischen Streuwertfunktionsverfahren ein Hash-Code (HC-1, HC-2, HC-3, HC-4, HC-5) erzeugt und in der in der zyklischen Reihenfolge vorangehenden Automationsstation gespeichert wird, wobei in die Berechnung der Hash-Codes jeweils die sicherheitsrelevanten statischen Daten (D1, D2, D3, D4, D5) der betreffenden Automationsstation (AS1, AS2, AS3, AS4, AS5) und der Hash-Code (HC-1, HC-2, HC-3, HC-4, HC-5) der in der zyklischen Reihenfolge vorangehenden Automationsstation bzw. ein Start-Hash-Code (HC-0) eingehen, dass in nachfolgenden Prüfläufen auf die gleiche Weise für jede beteiligte Automationsstation in derselben vorgegebenen zyklischen Reihenfolge nach demselben kryptografischen Streuwertfunktionsverfahren jeweils ein neuer Hash-Code (HC-1, HC-2, HC-3, HC-4, HC-5) erzeugt und der in der zyklischen Reihenfolge vorangehenden Automationsstation übergeben wird, und dass in jeder beteiligten Automationsstation (AS1, AS2, AS3, AS4, AS5) die Integritätsprüfung der sicherheitsrelevanten Daten (D1, D2, D3, D4, D5) der in der zyklischen Reihenfolge nachfolgenden Automationsstation durch Vergleich des in der Inbetriebsetzungsphase gespeicherten Hash-Codes der in der zyklischen Reihenfolge nachfolgenden Automationsstation mit dem im jeweiligen Prüflauf von der in der zyklischen Reihenfolge nachfolgenden Automationsstation übergebenen Hash-Code erfolgt, wobei eine Integritätsverletzung erkannt wird, wenn die miteinander verglichenen Hash-Codes nicht übereinstimmen.

10. Verfahren nach Anspruch 9, **dadurch gekennzeichnet, dass** für jede beteiligte Automationsstation (AS1, AS2, AS3, AS4, AS5) die sicherheitsrelevanten statischen Daten (D1, D2, D3, D4, D5) der betreffenden Automationsstation (AS1, AS2, AS3, AS4, AS5) in mindestens einer anderen beteiligten Automationsstation gespeichert werden.

11. Verfahren nach Anspruch 10, **dadurch gekennzeichnet, dass** für jede beteiligte Automationsstation (AS1, AS2, AS3, AS4, AS5) die sicherheitsrelevanten statischen Daten (D1, D2, D3, D4, D5) der betreffenden Automationsstation (AS1, AS2, AS3, AS4, AS5) in der in der zyklischen Reihenfolge vorangehenden Automationsstation gespeichert werden.

12. Verfahren nach Anspruch 11, **dadurch gekennzeichnet, dass** für jede beteiligte Automationsstation (AS1, AS2, AS3, AS4, AS5) die sicherheitsrelevanten statischen Daten (D1, D2, D3, D4, D5) der betreffenden Automationsstation zusätzlich in mindestens einer weiteren beteiligten Automationsstation gespeichert werden.

13. Verfahren nach Anspruch 11 oder 12, **dadurch gekennzeichnet, dass** im Falle einer von einer beteiligten Automationsstation (AS2) erkannten Integritätsverletzung der sicherheitsrelevanten statischen Daten der in der in der Reihenfolge nachfolgenden Automationsstation (AS3) die in mindestens einer anderen beteiligten Automationsstation gespeicherten sicherheitsrelevanten statischen Daten der betroffenen Automationsstation (AS3) in die betroffene Automationsstation (AS3) zurückgeschrieben werden.

## Claims

1. Method for checking the integrity of security-relevant data (D1, D2, D3, D4, D5) stored in two or more automation stations (AS1, AS2, AS3, AS4, AS5) which are networked with each other, **characterised in**
**that** in a commissioning phase for each automation station involved (AS1, AS2, AS3, AS4, AS5) a hash code (HC-1, HC-2, HC-3, HC-4, HC-5) is generated and stored according to a cryptographic hash value function method, wherein in the calculation of the hash codes each time the security-relevant static data (D1, D2, D3, D4, D5) of the respective automation station (AS1, AS2, AS3, AS4, AS5) and the hash code (HC-1, HC-2, HC-3, HC-4, HC-5) of another automation station involved or a start hash code (HC-0) are taken into account, so that the hash codes of the automation stations involved are concatenated with each other,
**that** in subsequent test runs in the same way for each automation station involved according to the same cryptographic hash value function each time a new hash code (HC-1, HC-2, HC-3, HC-4, HC-5) is generated, and
**that** the integrity check of the security-relevant data (D1, D2, D3, D4, D5) of the automation stations involved is performed by comparing the hash codes stored in the commissioning phase with the new hash codes generated in the respective test run, wherein an integrity violation is detected if the compared hash codes do not match.

2. Method according to claim 1, **characterised in**
**that** the integrity of the security-relevant data stored in the networked automation stations (AS1, AS2, AS3, AS4, AS5) is checked jointly, wherein in a commissioning phase for each automation station involved (AS1, AS2, AS3, AS4, AS5) in a predetermined sequence a hash code (HC-1, HC-2, HC-3, HC-4, HC-5) is generated and stored, in the calculation of which each time the security-relevant static data of the respective automation station and the hash code (HC-1, HC-2, HC-3, HC-4) of the automation station preceding in the sequence or a start hash code (HC-0) are taken into account, so that the automation stations involved are concatenated with each other via their hash codes (HC-1, HC-2, HC-3, HC-4, HC-5),
**that** in subsequent test runs in the same way for each automation station involved in the same predetermined sequence each time a new hash code (HC-1, HC-2, HC-3, HC-4, HC-5) is generated, and
**that** the integrity check is performed by comparing the stored hash code (HC-5) of the last automation station (AS5) in the sequence with the new hash code (HC-5) of the last automation station (AS5) in the sequence, wherein an integrity violation is detected if the compared hash codes do not match.

3. Method according to claim 2, **characterised in that** the start hash code (HC-0) is changed from time to time, preferably randomly.

4. Method according to claim 2 or 3, **characterised in that** the sequence defined for the concatenating of the automation stations (AS 1, AS2, AS3, AS4, AS5) is changed from time to time, preferably randomly.

5. Method according to claim 1, **characterised in**
**that** the integrity of the security-relevant data stored in the networked automation stations (AS1, AS2, AS3, AS4, AS5) is checked jointly, wherein in an encrypted database (DB) a digital copy (TAS1, TAS2, TAS3, TAS4, TAS5) of all automation stations (AS1, AS2, AS3, AS4, AS5) is stored, which digital copies each contain the security-relevant static data of the individual automation station (AS1, AS2, AS3, AS4, AS5), wherein for each of the digital copies involved (TAS1, TAS2, TAS3, TAS4, TAS5) in a predetermined sequence a hash code (HC-1T, HC-2T, HC-3T, HC-4T, HC-5T) is generated and stored in the database (DB), wherein in the calculation of the hash codes each time the data content of the respective digital copy (TAS1, TAS2, TAS3, TAS4, TAS5) and the hash code (HC-1T, HC-2T, HC-3T, HC-4T) of the digital copy preceding in the sequence or a starting hash code (HC-0) are taken into account, so that the digital copies involved (TAS1, TAS2, TAS3, TAS4, TAS5) are concatenated with each other via their hash codes (HC-1T, HC-2T, HC-3T, HC-4T, HC-5T), that for each automation station involved (AS1, AS2, AS3, AS4, AS5) in the same predetermined sequence a hash code (HC-1, HC-2, HC-3, HC-4, HC-5) is generated, in the calculation of which each time the security-relevant static data of the respective automation station and the hash code (HC-1, HC-2 , HC-3, HC-4) of the automation station preceding in the sequence or a start hash code (HC-0) are taken into account, so that the automation stations involved are concatenated with each other via their hash codes (HC-1, HC-2, HC-3, HC-4, HC-5), and
**that** the integrity check is performed by comparing the stored hash code (HC-5T) of the last digital copy (TAS5) in the sequence with the hash code (HC-5) of the last automation station (AS5) in the sequence, wherein an integrity violation is detected if the compared hash codes do not match.

6. Method according to claim 5, **characterised in that** the sequence defined for the concatenating of the automation stations (AS1, AS2, AS3, AS4, AS5) and their digital copies (TAS1, TAS2, TAS3, TAS4, TAS5) is changed from time to time, preferably randomly.

7. Method according to claim 5 or 6, **characterised in that** the start hash code (HC-0) is changed from time to time, preferably randomly.

8. Method according to any one of claims 5-7, **characterised in that** in the event of a detected integrity violation, the affected automation station (AS3) is determined by comparing the hash codes (HC-1T, HC-2T, HC-3T, HC-4T, HC-5T) of the digital copies (TAS1, TAS2, TAS3, TAS4, TAS5) stored in the database (DB) with the hash codes (HC-1, HC-2, HC-3, HC-4, HC-5) calculated of the automation stations (AS1, AS2, AS3, AS4, AS5), and that the data content of the digital copy (TAS3) of the affected automation station (AS3) is written back to the affected automation station (AS3).

9. Method according to claim 1, **characterised in**
**that** in a commissioning phase for each automation station involved (AS1, AS2, AS3, AS4, AS5) in a predetermined cyclic sequence of the same a hash code (HC-1, HC-2, HC-3, HC-4, HC-5) is generated according to a cryptographic hash value function method and stored in the automation station preceding in the cyclic sequence, wherein in the calculation of the hash codes each time the security-relevant static data (D1, D2, D3, D4, D5) of the respective automation station (AS1, AS2, AS3, AS4, AS5) and the hash code (HC-1, HC-2, HC-3, HC-4, HC-5) of the automation station preceding in the cyclic sequence or a start hash code (HC-0) are taken into account,
**that** in subsequent test runs in the same way for each automation station involved in the same predetermined cyclic sequence according to the same cryptographic hash value function method each time a new hash code (HC-1, HC-2, HC-3, HC-4, HC-5) is generated and transferred to the automation station preceding in the cyclic sequence, and
**that** in each automation station involved (AS1, AS2, AS3, AS4, AS5) the integrity check of the security-relevant data (D1, D2, D3, D4, D5) of the automation station following in the cyclic sequence is performed by comparing the hash code of the automation station following in the cyclic sequence stored in the commissioning phase with the hash code transferred in the respective test run from the automation station following in the cyclic sequence, wherein an integrity violation is detected if the compared hash codes do not match.

10. Method according to claim 9, **characterised in that** for each automation station involved (AS1, AS2, AS3, AS4, AS5), the security-relevant static data (D1, D2, D3, D4, D5) of the respective automation station (AS1, AS2, AS3, AS4, AS5) are stored in at least one other automation station involved.

11. Method according to claim 10, **characterised in that** for each automation station involved (AS1, AS2, AS3, AS4, AS5), the security-relevant static data (D1, D2, D3, D4, D5) of the respective automation station (AS1, AS2, AS3, AS4, AS5) are stored in the automation station preceding in the cyclic sequence.

12. Method according to claim 11, **characterised in that** for each automation station involved (AS1, AS2, AS3, AS4, AS5), the security-relevant static data (D1, D2, D3, D4, D5) of the respective automation station are additionally stored in at least one further automation station involved.

13. Method according to claim 11 or 12, **characterised in that** in the event of an integrity violation of the security-relevant static data of the automation station (AS3) following in the sequence that is detected by an automation station involved (AS2), the security-relevant static data of the affected automation station (AS3) stored in at least one other automation station involved are written back to the affected automation station (AS3).

## Revendications

1. Procédé de vérification de l'intégrité de données (D1, D2, D3, D4, D5) relatives à la sécurité et mémorisées dans deux ou plusieurs stations d'automatisation (AS1, AS2, AS3, AS4, AS5) mises en réseau entre elles,
**caractérisé en ce que**
lors d'une phase de mise en service, pour chaque station d'automatisation impliquée (AS1, AS2, AS3, AS4, AS5), un code de hachage (HC-1, HC-2, HC-3, HC-4, HC-5) est généré et mémorisé selon une méthode de fonction de hachage cryptographique, le calcul des codes de hachage prenant en compte les données statiques respectives (D1, D2, D3, D4, D5) relatives à la sécurité de la station d'automatisation correspondante (AS1, AS2, AS3, AS4, AS5) et le code de hachage (HC-1, HC-2, HC-3, HC-4, HC-5) d'une autre station d'automatisation impliquée ou un code de hachage de départ (HC-0), de telle sorte que les codes de hachage des stations d'automatisation impliquées sont enchaînés entre eux,
**en ce que**, lors des cycles de vérification suivants, un nouveau code de hachage (HC-1, HC-2, HC-3, HC-4, HC-5) est généré de la même manière pour chaque station d'automatisation impliquée, selon la même méthode de fonction de hachage cryptographique, et
**en ce que** la vérification de l'intégrité des données (D1, D2, D3, D4, D5) relatives à la sécurité des stations d'automatisation impliquées s'effectue par comparaison des codes de hachage mémorisés pendant la phase de mise en service avec les nouveaux codes de hachage générés pendant le cycle de vérification respectif, une violation de l'intégrité étant détectée si les codes de hachage comparés entre eux ne concordent pas.

2. Procédé selon la revendication 1,
**caractérisé en ce que** l'intégrité des données relatives à la sécurité, mémorisées dans les stations d'automatisation (AS1, AS2, AS3, AS4, AS5) mises en réseau, est vérifiée en commun, et, lors d'une phase de mise en service, un code de hachage (HC-1, HC-2, HC-3, HC-4, HC-5) est généré et mémorisé pour chaque station d'automatisation impliquée dans un ordre chronologique prédéfini, dont le calcul prend en compte les données statiques relatives à la sécurité de la station d'automatisation correspondante et le code de hachage (HC-1, HC-2, HC-3, HC-4) de la station d'automatisation précédente dans l'ordre chronologique ou un code de hachage de départ (HC-0), de sorte que les stations d'automatisation impliquées sont enchaînées les unes aux autres par leurs codes de hachage (HC-1, HC-2, HC-3, HC-4, HC-5),
**en ce que**, lors des cycles de vérification suivants, un nouveau code de hachage (HC-1, HC-2, HC-3, HC-4, HC-5) est généré de la même manière pour chaque station d'automatisation impliquée dans le même ordre chronologique prédéfini, et
**en ce que** la vérification de l'intégrité est effectuée par comparaison du code de hachage mémorisé (HC-5) de la dernière station d'automatisation (AS5) dans l'ordre chronologique avec le nouveau code de hachage (HC-5) de la dernière station d'automatisation (AS5) dans l'ordre chronologique, une violation de l'intégrité étant détectée si les codes de hachage comparés entre eux ne concordent pas.

3. Procédé selon la revendication 2,
**caractérisé en ce que** le code de hachage de départ (HC-0) est modifié de temps en temps, de préférence de manière aléatoire.

4. Procédé selon la revendication 2 ou 3,
**caractérisé en ce que** l'ordre chronologique établi pour l'enchaînement des stations d'automatisation (AS1, AS2, AS3, AS4, AS5) est modifié de temps en temps, de préférence de manière aléatoire.

5. Procédé selon la revendication 1,
**caractérisé en ce que** l'intégrité des données statiques relatives à la sécurité, mémorisées dans les stations d'automatisation (AS1, AS2, AS3, AS4, AS5) mises en réseau, est vérifiée en commun, une copie numérique (TAS1, TAS2, TAS3, TAS4, TAS5) respective de toutes les stations d'automatisation (AS1, AS2, AS3, AS4, AS5) étant mémorisée dans une base de données (DB) cryptée, lesquelles copies numériques contiennent chacune les données statiques relatives à la sécurité de la station d'automatisation individuelle (AS1, AS2, AS3, AS4, AS5), un code de hachage (HC-1T, HC-2T, HC-3T, HC-4T, HC-5T) étant généré pour chacune des copies numériques impliquées (TAS1, TAS2, TAS3, TAS4, TAS5) dans un ordre chronologique prédéfini et étant mémorisé dans la base de données (DB), le calcul des codes de hachage prenant en compte les contenus de données respectifs de la copie numérique correspondante (TAS1, TAS2, TAS3, TAS4, TAS5) et le code de hachage (HC-1T, HC-2T, HC-3T, HC-4T) de la copie numérique précédente dans l'ordre chronologique ou un code de hachage de départ (HC-0), de sorte que les copies numériques impliquées (TAS1, TAS2, TAS3, TAS4, TAS5) sont enchaînées entre elles par leurs codes de hachage (HC-1T, HC-2T, HC-3T, HC-4T, HC-5T),
**en ce que** pour chaque station d'automatisation impliquée (AS1, AS2, AS3, AS4, AS5), dans le même ordre chronologique prédéfini, un code de hachage (HC-1, HC-2, HC-3, HC-4, HC-5) est généré, dont le calcul prend en compte les données statiques respectives relatives à la sécurité de la station d'automatisation correspondante et le code de hachage (HC-1, HC-2, HC-3, HC-4) de la station d'automatisation précédente dans l'ordre chronologique ou le code de hachage de départ (HC-0), de sorte que les stations d'automatisation impliquées sont enchaînées entre elles par leurs codes de hachage (HC-1, HC-2, HC-3, HC-4, HC-5), et
**en ce que** la vérification de l'intégrité s'effectue par comparaison du code de hachage mémorisé (HC-5T) de la dernière copie numérique (TAS5) dans l'ordre chronologique avec le code de hachage (HC-5) de la dernière station d'automatisation (AS5) dans l'ordre chronologique, une violation de l'intégrité étant détectée si les codes de hachage comparés entre eux ne concordent pas.

6. Procédé selon la revendication 5,
**caractérisé en ce que** l'ordre chronologique établi pour l'enchaînement des stations d'automation (AS1, AS2, AS3, AS4, AS5) et de leurs copies numériques (TAS1, TAS2, TAS3, TAS4, TAS5) est modifié de temps en temps, de préférence de manière aléatoire.

7. Procédé selon la revendication 5 ou 6,
**caractérisé en ce que** le code de hachage de départ (HC-0) est modifié de temps en temps, de préférence de manière aléatoire.

8. Procédé selon l'une des revendications 5 à 7,
**caractérisé en ce que**, en cas de détection d'une violation de l'intégrité, la station d'automatisation concernée (AS3) est déterminée par comparaison des codes de hachage (HC-1T, HC-2T, HC-3T, HC-4T, HC-5T), mémorisés dans la base de données (DB), des copies numériques (TAS1, TAS2, TAS3, TAS4, TAS5) avec les codes de hachage (HC-1, HC-2, HC-3, HC-4, HC-5) calculés des stations d'automatisation (AS1, AS2, AS3, AS4, AS5), et
**en ce que** le contenu de données de la copie numérique (TAS3) de la station d'automatisation concernée (AS3) est réécrit dans la station d'automatisation concernée (AS3).

9. Procédé selon la revendication 1,
**caractérisé en ce que**, lors d'une phase de mise en service, pour chaque station d'automatisation impliquée (AS1, AS2, AS3, AS4, AS5), dans un ordre chronologique cyclique prédéfini de celle-ci, un code de hachage (HC-1, HC-2, HC-3, HC-4, HC-5) est généré selon une méthode de fonction de hachage cryptographique et est mémorisé dans la station d'automatisation qui précède dans l'ordre chronologique cyclique, le calcul des codes de hachage prenant en compte les données statiques respectives (D1, D2, D3, D4, D5) relatives à la sécurité de la station d'automatisation correspondante (AS1, AS2, AS3, AS4, AS5) et le code de hachage (HC-1, HC-2, HC-3, HC-4, HC-5) de la station d'automatisation qui précède dans l'ordre chronologique cyclique ou un code de hachage de départ (HC-0),
**en ce que**, lors des cycles de vérification suivants, un nouveau code de hachage respectif (HC-1, HC-2, HC-3, HC-4, HC-5) est généré de la même manière pour chaque station d'automatisation impliquée dans le même ordre chronologique cyclique prédéfini selon la même méthode de fonction de hachage cryptographique et est transmis à la station d'automatisation qui précède dans l'ordre chronologique cyclique, et
**en ce que**, dans chaque station d'automatisation impliquée (AS1, AS2, AS3, AS4, AS5), la vérification de l'intégrité des données (D1, D2, D3, D4, D5) relatives à la sécurité de la station d'automatisation suivante dans l'ordre chronologique cyclique s'effectue par comparaison du code de hachage, mémorisé lors de la phase de mise en service, de la station d'automatisation suivante dans l'ordre chronologique cyclique avec le code de hachage transmis lors du cycle de vérification respectif de la station d'automatisation suivante dans l'ordre chronologique cyclique, une violation de l'intégrité étant détectée si les codes de hachage comparés entre eux ne concordent pas.

10. Procédé selon la revendication 9,
**caractérisé en ce que**, pour chaque station d'automatisation correspondante (AS1, AS2, AS3, AS4, AS5), les données statiques (D1, D2, D3, D4, D5) relatives à la sécurité de la station d'automatisation concernée (AS1, AS2, AS3, AS4, AS5) sont mémorisées dans au moins une autre station d'automatisation impliquée.

11. Procédé selon la revendication 10,
**caractérisé en ce que**, pour chaque station d'automatisation impliquée (AS1, AS2, AS3, AS4, AS5), les données statiques (D1, D2, D3, D4, D5) relatives à la sécurité de la station d'automatisation correspondante (AS1, AS2, AS3, AS4, AS5) sont mémorisées dans la station d'automatisation précédente dans l'ordre chronologique cyclique.

12. Procédé selon la revendication 11,
**caractérisé en ce que**, pour chaque station d'automatisation impliquée (AS1, AS2, AS3, AS4, AS5), les données statiques (D1, D2, D3, D4, D5) relatives à la sécurité de la station d'automatisation correspondante sont en supplément mémorisées dans au moins une autre station d'automatisation impliquée.

13. Procédé selon la revendication 11 ou 12,
**caractérisé en ce que**, en cas de violation, détectée par une station d'automatisation (AS2) impliquée, de l'intégrité des données statiques relatives à la sécurité de la station d'automatisation (AS3) suivante dans l'ordre chronologique, les données statiques relatives à la sécurité de la station d'automatisation (AS3) concernée, mémorisées dans au moins une autre station d'automatisation impliquée, sont réécrites dans la station d'automatisation concernée (AS3).
